# EUROPÄISCHE PATENTSCHRIFT

(11) **EP 3 844 094 B1**
(45) Veröffentlichungstag und Bekanntmachung des Hinweises auf die Patenterteilung: **16.02.2022**
(21) Anmeldenummer: 19756340.6
(22) Anmeldetag: 16.08.2019
(51) Int. Cl.: B67D 7/02, B67D 1/04, B67D 1/00

(54) **DOSIERSPENDER**
METERING DISPENSER
DISTRIBUTEUR DE DOSAGE

(30) Priorität: 28.08.2018 DE 102018214532
(43) Veröffentlichungstag der Anmeldung: 07.07.2021
(73) Patentinhaber: Hochschule für angewandte Wissenschaften Kempten, 87435 Kempten (DE)
(72) Erfinder: SCHREIBER, Regina, 87435 Kempten (DE); DABELSTEIN, Samira, 23558 Lübeck (DE); LÖHR, Stephan, 87448 Waltenhofen (DE); STEINWEG, Benno, 87480 Weitnau (DE)
(74) Vertreter: Hoefer & Partner Patentanwälte mbB
(86) Internationale Anmeldenummer: PCT/EP2019/072024
(87) Internationale Veröffentlichungsnummer: WO 2020/043512

(56) Entgegenhaltungen:
- WO-A1-92/08670
- WO-A1-2008/079089
- DE-U1- 20 001 409
- GB-A- 2 230 057
- US-A- 5 553 740
- US-A1- 2014 263 440

## Beschreibung

Die Erfindung betrifft einen Dosierspender für zähflüssige Produkte. Mittels des Dosierspenders können kleine Mengen an zähflüssigem Produkt verpackungsfrei abgegeben werden.

Beispielsweise im Einzelhandel, im regionalen Direktverkauf oder im Gastgewerbe werden zähflüssige Produkte, beispielsweise Quark oder Marmelade, üblicherweise in kleinen Gebinden und einzeln verpackt an den Kunden abgegeben. Dies verursacht relativ viel Verpackungsmüll. Ebenso werden beispielsweise auch Pflegeprodukte oder medizinische Produkte, z. B. Creme und Salben, in kleinen Gebinden vorgehalten. Auch dies verursacht entsprechend viel Verpackungsmüll.

Aufgabe vorliegender Erfindung ist es, einen Dosierspender anzugeben, der bei einfacher Herstellung und wartungsarmen Betrieb die benutzerfreundliche Abgabe zähflüssiger Produkte ermöglicht. Insbesondere soll der Dosierspender auch eine Temperierung des Produkts ermöglichen.

Gelöst wird diese Aufgabe durch die Merkmale der unabhängigen Ansprüche. Die abhängigen Ansprüche haben vorteilhafte Ausgestaltungen der Erfindung zum Gegenstand.

Somit wird die Aufgabe durch einen Dosierspender gelöst, der insbesondere ausgebildet ist für den Einsatz z. B. im Einzelhandel, im regionalen Direktverkauf, in der Gastronomie, im Großhandel, in Apotheken, in Praxen, in Pflegeeinrichtungen, in Krankenhäusern, usw.

Der Dosierspender umfasst ein Gehäuse. In dem Gehäuse ist zumindest ein Aufnahmeraum ausgebildet. Insbesondere ist genau ein Aufnahmeraum vorgesehen oder es sind zwei oder drei oder vier Aufnahmeräume vorgesehen. Der jeweilige Aufnahmeraum ist zur Aufnahme zumindest eines Beutels ausgebildet. Hierbei werden Beutel verwendet, die mit dem zähflüssigen Produkt gefüllt sind. In einer Ausgestaltung ist es auch möglich, in einem Aufnahmeraum mehr als einen Beutel anzuordnen. So ist es möglich, in dem Aufnahmeraum beispielsweise zwei Beutel mit unterschiedlichen Substanzen anzuordnen, sodass der Dosierspender aus einem Aufnahmeraum ein Mischprodukt, insbesondere ein Zweiphasenprodukt, abgibt.

Der Begriff "Beutel" beschreibt im Rahmen dieser Erfindung eine beliebige, vorzugsweise flexible, Verpackung des Produkts. Unter "Verpackung" ist insbesondere die "Primärverpackung" zu verstehen.

Des Weiteren umfasst der Dosierspender einen Stempel pro Aufnahmeraum, wobei der Stempel im Aufnahmeraum angeordnet ist und zum Auspressen des zumindest einen Beutels dient. Der Außendurchmesser des Stempels entspricht im Wesentlichen dem Innendurchmesser des Aufnahmeraums, sodass der Stempel über die volle Fläche des Aufnahmeraums und somit die volle Fläche des Beutels auf den Beutel drückt.

Darüber hinaus umfasst der Dosierspender eine im Gehäuse geführte bzw. abgestützte Betätigungsvorrichtung pro Stempel zum linear beweglichen Betätigen des jeweiligen Stempels. Über diese Betätigungsvorrichtung ist der entsprechende Stempel entlang einer Stempelachse im Aufnahmeraum bewegbar, sodass mittels des Stempels der Beutel ausgepresst werden kann.

Im Bereich eines Endes (erstes Ende) des jeweiligen Aufnahmeraums befindet sich eine Auslassöffnung für das Produkt. Über diese Auslassöffnung verlässt das Produkt das Gehäuse und somit den Dosierspender. Insbesondere ist die Auslassöffnung bodenseitig angeordnet. Alternativ befindet sich die Auslassöffnung im Bereich des ersten Endes, jedoch seitlich am Dosierspender. Dadurch erfolgt die Abgabe des Produkts seitlich am Gehäuse.

Durch die Verwendung des Beutels entsteht während der Benutzung des Dosierspenders kein Kontakt zwischen dem zähflüssigen Produkt und dem Dosierspender. Dadurch ist die Reinigung des Dosierspenders äußerst einfach bzw. nicht nötig, da der ausgepresste Beutel einfach aus dem Aufnahmeraum entfernt werden kann und ein neuer Beutel eingesetzt werden kann. Insbesondere ist dabei vorgesehen, dass die Auslassöffnung so ausgebildet und angeordnet ist, dass ein Ende des Beutels aus der Aufnahmeöffnung heraus, beispielsweise in einen Abgaberaum unter dem Gehäuse, ragen kann, sodass auch in diesem Bereich kein Kontakt zwischen dem Dosierspender und dem Produkt stattfindet.

Durch die Verwendung des Stempels und des Aufnahmeraums, drückt der gesamte Stempel auf den vollen Durchmesser des Beutels, wodurch eine vollständige Entleerung des Beutels möglich ist. Der Dosierspender bedarf daher keiner Pumpen, Schläuche oder anderweitiger Vorrichtungen zum Fördern des zähflüssigen Produktes.

Der Dosierspender ist in seinen Ausmaßen insbesondere für die oben genannten Einsatzgebiete ausgebildet. Insbesondere umfasst der einzelne Aufnahmeraum ein

Aufnahmevolumen von maximal 30 Litern, vorzugsweise maximal 10 Litern. Vorzugsweise beträgt das Aufnahmevolumen zumindest 0,5 Liter, besonders vorzugsweise zumindest 1 Liter.

Derartige Dosierspender werden beispielsweise in folgenden Veröffentlichungen gezeigt: DEU 200 01 409, US 5 553 740, US 2014/263440, WO 2008/079089.

Bevorzugt ist vorgesehen, dass der Aufnahmeraum ein dem ersten Ende gegenüberliegendes zweites Ende aufweist. Am zweiten Ende ist der Aufnahmeraum vorzugsweise über seinen gesamten Querschnitt offen. Dadurch kann der Stempel am zweiten Ende in den Aufnahmeraum eingesetzt werden. Insbesondere ist es so auch möglich, beim Befüllen des Dosierspenders mit einem Beutel, den Stempel über das zweite Ende des Aufnahmeraums aus dem Aufnahmeraum zu entnehmen und so den Beutel über das zweite Ende in den Aufnahmeraum einzuführen. Vorzugsweise umfasst das Gehäuse hierzu einen Deckel, sodass die Oberseite des Gehäuses geöffnet werden kann.

Alternativ oder zusätzlich ist vorgesehen, dass die Aufnahmeraum-Wandung eine Nachfüllöffnung aufweist. Dies wird noch im Detail beschrieben.

Erfindungsgemäß ist vorgesehen, dass der jeweilige Aufnahmeraum durch eine zylindrische Aufnahmeraum-Wandung und am ersten Ende durch einen Beutelauflageboden, der den Auflagebereich für den Beutel darstellt, gebildet ist.

Für die Ausgestaltung des jeweiligen Aufnahmeraums sind insbesondere zwei Varianten vorgesehen:
Gemäß der ersten Variante ist bevorzugt vorgesehen, dass der Aufnahmeraum mit seinem ersten Ende unmittelbar an eine Außenwandung des Gehäuses grenzt. Insbesondere handelt es sich hierbei um eine Boden-Außenwandung des Gehäuses. Dabei bildet die Boden-Außenwandung des Gehäuses den oben definierten "Beutelauflageboden". Diese Variante eignet sich insbesondere für eine einteilige Fertigung, insbesondere additive Fertigung, der Boden-Außenwandung mit der Aufnahmeraum-Wandung.

Gemäß der zweiten Variante ist bevorzugt vorgesehen, dass der Aufnahmeraum durch eine zylindrische Aufnahmeraum-Wandung und einen Aufnahmeraum-Boden am ersten Ende gebildet ist. Der eigene Aufnahmeraum-Boden des Aufnahmeraums bildet dabei den "Beutelauflageboden". Die Auslassöffnung ist im Aufnahmeraum-Boden ausgebildet, wobei das Gebilde aus Aufnahmeraum-Wandung und Aufnahmeraum-Boden in einer Aussparung der Außenwandung, vorzugsweise Boden-Außenwandung, des Gehäuses steckt. Der Durchmesser der Aussparung entspricht insbesondere einem Außendurchmesser der Aufnahmeraum-Wandung. Diese Variante eignet sich insbesondere für einen modularen Aufbau, bei dem das Gebilde aus Aufnahmeraum-Wandung und der Aufnahmeraum-Boden zerstörungsfrei lösbar mit dem Gehäuse verbunden ist.

In beiden Varianten ist der Aufnahmeraum dabei insbesondere konzentrisch um die Stempelachse ausgebildet, wobei die Stempelachse vorzugsweise vertikal steht. Die Außenwandung des Gehäuses, insbesondere die Boden-Außenwandung (Beutelauflageboden) des Gehäuses, oder der Aufnahmeraum-Boden (Beutelauflageboden) schließt den Aufnahmeraum an seinem ersten Ende ab. Dadurch, dass der Aufnahmeraum mit seinem ersten Ende unmittelbar an die Außenseite des Gehäuses grenzt, ist es möglich, dass der Beutel mit seinem Auslassbereich durch die Auslassöffnung hindurch nach außen, beispielsweise in einen Abgaberaum im Ständer, ragen kann. Innerhalb des Gehäuses bedarf es somit keiner Schläuche oder anderweitiger Führungen für das Produkt, sondern der Beutel kann unmittelbar durch die Auslassöffnung nach außen ragen. Auch außerhalb des Gehäuses bedarf es keiner weiteren Führung des Produktes, da ein entsprechender Behälter zur Aufnahme des gespendeten Produktes unmittelbar an bzw. unter den Auslassbereich des Beutels gestellt werden kann.

Die "Außenwandung des Gehäuses" liegt außerhalb des Aufnahmeraums. Vorzugsweise bildet die "Außenwandung des Gehäuses" auch die äußerste Wandung des Gehäuses; alternativ kann das Gehäuse eine weiter außen liegende zusätzliche Wandung aufweisen. Unterhalb der Boden-Außenwandung des Gehäuses schließt sich vorzugsweise der Ständer an, der optional eine eigene Ständer-Seitenwand und/oder einen eigenen Ständer-Boden umfassen kann.

Die Außenwandung (insbesondere Boden-Außenwandung) des Gehäuses oder der Aufnahmeraum-Boden, bildet somit als Beutelauflageboden insbesondere den Auflagebereich, auf dem der Beutel direkt oder indirekt aufliegt. Zwischen Beutel und Beutelauflageboden kann optional ein Bodenbereich eines Inlays angeordnet werden. Der Stempel presst den Beutel gegen diesen Auflagebereich.

Der Auflagebereich ist vorzugsweise leicht konisch bzw. trichterförmig geformt. Auch die zum Auflagebereich hinweisende Seite des Stempels kann eine entsprechende konische Form aufweisen, sodass eine restlose Entleerung des Beutels durch die komplementären Formen unterstützt wird.

Alternativ ist vorgesehen, dass der Auflagebereich und somit der Beutelauflageboden derart konisch ausgebildet sind, so dass er radial außen niedriger ist als radial innen. Dadurch fließt Kondenswasser radial nach außen.

Bevorzugt umfasst der Beutelauflageboden zumindest eine Kondenswasser-Abflussöffnung, und vorzugsweise auch eine Kondenswasser-Sammelrinne. Die Kondenswasser-Sammelrinne ist insbesondere eine Rinne am radial äußeren Umfang des Beutelauflagebodens. Die Kondenswasser-Sammelrinne ist vorzugsweise zu der zumindest einen Kondenswasser-Abflussöffnung geneigt.

Vorzugsweise sind am Beutelauflageboden mehrere Fortsätze, insbesondere Noppen, zur Beabstandung des Beutels von seiner Auflagefläche ausgebildet. Dadurch wird vermieden, dass der Beutel im Kondenswasser steht oder das Kondenswasser aufgrund des aufliegenden Beutels nicht abfließen kann.

Bevorzugt umfasst der Beutelauflageboden einen ringförmigen Außenbereich und einen gegenüber dem Außenbereich tiefer liegenden Ventilauflagebereich. Am Ventilauflagebereich kann das Ventil des Beutels oder ein ventilnaher Bereich des Beutels aufliegen und/oder im Bereich des Ventilauflagebereichs angeordnet werden. Der Ventilauflagebereich ist insbesondere ringsum der Auslassöffnung ausgebildet. Der Außenbereich und/oder der Ventilauflagebereich können jeweils zumindest eine Kondenswasser-Abflussöffnung und/oder Kondenswasser-Sammelrinne und/oder Fortsätze (z.B. Noppen) aufweisen. In beiden Bereichen ist die Kondenswasser-Sammelrinne vorzugsweise zu der zumindest einen Kondenswasser-Abflussöffnung geneigt.

Des Weiteren ist bevorzugt vorgesehen, dass der Dosierspender den bereits erwähnten Ständer umfasst, auf dem das Gehäuse steht. Der Ständer kann einteilig mit zumindest einem Teil des Gehäuses gefertigt sein. Alternativ kann der Ständer auch ein eigenes Bauteil sein, auf dem das Gehäuse aufsitzt. Der Ständer ist so ausgebildet, dass unmittelbar unter die Auslassöffnung(en) ein Behälter zur Aufnahme des Produkts platzierbar ist. Der Nutzer kann somit den Behälter direkt unter die Auslassöffnung(en) stellen und über die Betätigungsvorrichtung den zumindest einen Stempel betätigen. Dadurch wird das Produkt nach unten gepresst und fließt in den Behälter. Beispielsweise kann innerhalb des Ständers und somit direkt unter dem Gehäuse eine Waage platziert werden. Das Gefäß steht dann während des Befüllens auf der Waage. Ferner erfüllt der Ständer eine Hygienefunktion, da er das aus dem Gehäuse ragende Ende des Beutels (insbesondere das Ventil) vor Kontamination von außen schützt.

Bevorzugt ist vorgesehen, dass der Ständer einen geschlossenen Abgaberaum mit Ständer-Seitenwand und vorzugsweise einem Ständer-Boden bildet. Der Abgaberaum ist insbesondere zum Zwecke der thermischen Dämmung "abgeschlossen". Insbesondere umgibt die Ständer-Seitenwand den geschlossenen Abgaberaum vollständig mit der Ausnahme einer in der Ständer-Seitenwand ausgesparten Ständer-Öffnung zum Einsetzen des Behälters, wobei an der Ständer-Öffnung vorzugsweise ein Ständer-Deckel zum Verschließen der Ständer-Öffnung angeordnet ist. Der Ständer-Deckel ist vorzugsweise verschiebbar oder verschwenkbar angeordnet.

Bevorzugt ist vorgesehen, dass die Ständer-Seitenwand und/oder der Ständer-Boden jeweils zumindest einen Hohlraum zur thermischen Dämmung, vorzugsweise gefüllt mit thermisch dämmendem Material, aufweist/aufweisen.

Im Rahmen vorliegender Erfindung bedeutet "temperieren" stets kühlen und/oder erwärmen. So steht "Temperieraggregat" zum Beispiel für ein Kühlaggregat oder ein Heizaggregat oder ein kombiniertes Aggregat zum wahlweisen Kühlen und Heizen. Insbesondere umfasst das jeweilige Temperieraggregat ein oder mehrere Peltierelemente und den zughörigen Kühler für Wasser- oder Luftkühlung des Peltierelements bzw. der Peltierelemente.

Die hier beschriebenen Temperieraggregate umfassen vorzugsweise jeweils zumindest ein Peltierelement. Ferner ist bevorzugt vorgesehen, das das jeweilige Temperieraggregat (ausgebildet als Kühlaggregat) mit einer Vorrichtung zum Luftkühlen des Peltierelements oder zum Wasserkühlen des Peltierelements für das Abführen der Wärme in die Umgebung ausgestattet ist.

Die Übertragung der Kühl- bzw. Wärmeleistung zum Aufnahmeraum oder Abgaberaum erfolgt entweder durch fluidlose Übertragung und dementsprechend möglichst unmittelbare Anordnung des Aggregats am entsprechenden Raum, oder durch eine Wärmeträgerflüssigkeit in einem entsprechenden Fluidkreislauf.

Bevorzugt ist somit zumindest ein Ständer-Temperieraggregat zum aktiven Temperieren des Abgaberaums vorgesehen, wobei das Ständer-Temperieraggregat vorzugsweise an der Ständer-Seitenwand angeordnet ist.

Bevorzugt ist das zumindest eine Ständer-Temperieraggregat zur fluidlosen Übertragung von Kälte-oder Wärmeleistung direkt an der Außenseite des Abgaberaums angeordnet.

Der Ausdruck "zur fluidlosen Übertragung" bedeutet, dass kein Fluidkreislauf für eine Wärmeträgerflüssigkeit vorgesehen ist und kann auch als "fluidlose Wärmeleitung" bezeichnet werden. "Übertragung von Kälte-oder Wärmeleistung" beschreibt eine "Übertragung von Wärme zu Heiz- oder Kühlzwecken"

Alternativ ist ein Fluidkreislauf für eine Wärmeträgerflüssigkeit zum Temperieren des Abgaberaums vorgesehen, wobei das zumindest eine Ständer-Temperieraggregat, insbesondere mit seinem Peltierelement, zum Temperieren der Wärmeträgerflüssigkeit angeordnet ist.

Wie beschrieben ist bevorzugt vorgesehen, dass der Aufnahmeraum durch eine zylindrische Aufnahmeraum-Wandung gebildet ist. Die Querschnittsform des Aufnahmeraums kann dabei beliebig sein, ist jedoch vorzugsweise rund oder oval. Der Aufnahmeraum, gebildet durch die Aufnahmeraum-Wandung, ist insbesondere oben (am zweiten Ende) offen. An der Unterseite ist der Aufnahmeraum, wie bereits beschrieben, durch den Beutelauflageboden, vorzugsweise gebildet durch die Außenwandung (insbesondere Boden-Außenwandung) des Gehäuses oder den Aufnahmeraum-Boden, begrenzt.

Wie bereits beschrieben, ist es möglich, den Stempel über das offene zweite Ende des Aufnahmeraums zu entnehmen und über diese Öffnung auch den Beutel nachzufüllen. Zusätzlich oder alternativ ist bevorzugt vorgesehen, dass die Aufnahmeraum-Wandung eine Nachfüllöffnung und einen die Nachfüllöffnung verschließenden Deckel umfasst. Die Nachfüllöffnung bzw. der Deckel befinden sich vorzugsweise seitlich am Aufnahmeraum und somit in der Aufnahmeraum-Wandung. Der Deckel kann insbesondere über ein Scharnier mit der Aufnahmeraum-Wandung verbunden sein. Durch Öffnen des Deckels kann über die Nachfüllöffnung der entleerte Beutel entnommen werden und ein neuer Beutel eingesetzt werden.

Gemäß einer weiteren Variante ist vorgesehen, dass die Aufnahmeraum-Wandung samt Beutelauflageboden, also der gesamte Aufnahmeraum, zum Befüllen des Aufnahmeraums seitlich aus dem Gehäuse entnehmbar, insbesondere herausschwenkbar, ist. Insbesondere sind hierzu die Aufnahmeraum-Wandung und der Beutelauflageboden fest mit einem Gehäusedeckel in der Seiten-Außenwand des Gehäuses verbunden oder integral gefertigt. Diese gesamte Einheit ist aus dem Gehäuse entnehmbar, insbesondere herausschwenkbar.

Erfindungsgemäß ist vorgesehen, dass zwischen der Aufnahmeraum-Wandung und einer Außenwandung (insbesondere Seiten-Außenwandung) des Gehäuses ein Freiraum gebildet ist. Der Freiraum kann sich dabei entweder vollumfänglich um den gesamten Umfang, ggf. mit Ausnahme zumindest eines Aggregatraums, der Aufnahmeraum-Wandung und/oder entlang der gesamten Höhe der Aufnahmeraum-Wandung erstrecken. Insbesondere ist der Freiraum als Hohlraum zwischen einer Doppelwand ausgebildet. Besonders bevorzugt ist die Doppelwand innen durch die Aufnahmeraum-Wandung und/oder außen durch die Seiten-Wandung des Gehäuses gebildet. Der Hohlraum dient zur thermischen Dämmung, und ist vorzugsweise mit thermisch dämmendem Material gefüllt. Der Dosierspender umfasst vorzugsweise zumindest ein Aufnahmeraum-Temperieraggregat, das insbesondere radial außerhalb der Aufnahmeraum-Wandung angeordnet ist. Bevorzugt sind zwei, drei oder vier Aufnahmeraum-Temperieraggregate vorgesehen.

Vorzugsweise ist das Ständer-Temperieraggregat lediglich zum Temperieren des Abgaberaums angeordnet ist. Alternativ kann aber auch zumindest eines der hier beschriebenen Temperieraggregate (Ständer-Temperieraggregat oder Aufnahmeraum-Temperieraggregat) für die gemeinsame Temperierung des Abgaberaums und des Aufnahmeraums verwendet werden.

Bevorzugt ist vorgesehen, dass im Gehäuse ein Aggregatraum ausgebildet ist, der radial innen vorzugsweise durch die Aufnahmeraum-Wandung begrenzt ist und radial außen vorzugsweise offen ist, wobei das Aufnahmeraum-Temperieraggregat vollständig oder teilweise in dem Aggregatraum angeordnet ist. Insbesondere ist pro Aufnahmeraum-Temperieraggregat ein Aggregatraum ausgebildet. Insbesondere ist im Aggregatraum, vorzugsweise ringsum das Temperieraggregat, ein thermisch dämmendes Material eingesetzt.

Bevorzugt ist vorgesehen, dass im Aufnahmeraum, insbesondere für den direkten Kontakt mit dem Beutel, zumindest ein metallenes Inlay zur Übertragung von Kälte- oder Wärmeleistung auf den Beutel angeordnet ist, wobei das Inlay vorzugsweise einen vollumfänglichen Rohrbereich und/oder einen ringförmigen Bodenbereich umfasst.

Das Inlay ist vorzugsweise aus Aluminium. Das Inlay ist vorzugsweise in sich stabil, insbesondere mit einer Wandstärke von zumindest 1 mm.

Der Rohrbereich des Inlays erstreckt sich vorzugsweise über zumindest 50% der Höhe des Aufnahmeraums. Im Bodenbereich ist vorzugsweise eine mit der Auslassöffnung fluchtende Aussparung vorgesehen.

Bei Verwendung des Inlays mit Bodenbereich ist bevorzugt vorgesehen, dass der Bodenbereich Kondenswasser-Aussparungen zum Durchleiten des Kondenswassers nach unten zum Beutelauflageboden umfasst, wobei der Beutel hier nicht direkt am Beutelauflageboden des Aufnahmeraums, sondern auf dem Bodenbereich des Inlays aufliegt. Ferner bevorzugt ist vorgesehen, dass der Bodenbereich Fortsätze, insbesondere Noppen, zur Beabstandung des Beutels aufweist.

Bevorzugt ist vorgesehen, dass das zumindest eine Aufnahmeraum-Temperieraggregat, insbesondere mit einem Peltierelement ausgestattet, zur fluidlosen Übertragung von Kälte-oder Wärmeleistung direkt an der Außenseite des Inlays angeordnet ist.

Alternativ ist ein Fluidkreislauf für eine Wärmeträgerflüssigkeit zum Temperieren des Aufnahmeraums vorgesehen, wobei das zumindest eine Aufnahmeraum-Temperieraggregat, insbesondere mit seinem Peltierelement, zur Kühlung der Wärmeträgerflüssigkeit angeordnet ist.

Bevorzugt ist vorgesehen, dass der Beutelauflageboden zumindest einen Hohlraum zur thermischen Dämmung, vorzugsweise gefüllt mit thermisch dämmendem Material, aufweist. Bevorzugt ist vorgesehen, dass der Stempel zumindest einen Hohlraum zur thermischen Dämmung, vorzugsweise gefüllt mit thermisch dämmendem Material, aufweist.

Bevorzugt ist vorgesehen, dass ein horizontaler Bereich des Gehäuses über dem Aufnahmeraum, insbesondere der Stützbereich, zumindest einen Hohlraum zur thermischen Dämmung, vorzugsweise gefüllt mit thermisch dämmendem Material, aufweist.

Ferner ist es auch möglich, dass sich der Freiraum nur über einen Teil des Umfangs und/oder Teil der Höhe der Aufnahmeraum-Wandung erstreckt. Dies ist insbesondere der Fall, wenn die Aufnahmeraum-Wandung abschnittsweise an eine Trennwand im Gehäuse oder an die Seiten-Außenwandung des Gehäuses oder an eine Aufnahmeraum-Wandung eines weiteren Aufnahmeraums grenzt bzw. abschnittsweise durch diese Trennwand und/oder Seiten-Außenwandung und/oder weitere Aufnahmeraum-Wandung gebildet ist.

In dem Freiraum, insbesondere ausgebildet als Hohlraum, ist vorzugsweise, wie bereits beschrieben, ein thermisch dämmendes Material angeordnet. Zusätzlich oder alternativ zur Anordnung des thermisch dämmenden Materials in dem Freiraum ist bevorzugt vorgesehen, dass die Außenraum-Wandung und/oder die Außenwandung des Gehäuses (Boden-Außenwandung und/oder Seiten-Außenwandung) Hohlräume zur thermischen Dämmung umfasst.

Zusätzlich oder alternativ zur Verwendung thermisch dämmenden Materials im Freiraum kann der Freiraum für weitere Bestandteile des Dosierspenders verwendet werden. So ist bevorzugt vorgesehen, dass in dem Freiraum Bestandteile einer aktiven Temperierung (zur Kühlung oder Erwärmung) angeordnet werden. Diese Bestandteile der aktiven Temperierung umfassen beispielsweise Kanäle zum Führen einer Wärmeträgerflüssigkeit und/oder elektrothermische Komponenten, wie beispielsweise Peltier-Elemente, zum Temperieren. Des Weiteren können in dem Freiraum auch Sensoren angeordnet werden. Beispielhafte Sensoren werden noch im Detail beschrieben.

Wie eingangs beschrieben, umfasst der Dosierspender eine Betätigungsvorrichtung zum Bewegen des jeweiligen Stempels. Diese Betätigungsvorrichtung umfasst vorzugsweise eine Übertragungsvorrichtung pro Stempel und zumindest eine Antriebsvorrichtung. Die Antriebsvorrichtung ist zum Bewegen der Übertragungsvorrichtung(en) ausgebildet. Die jeweilige Übertragungsvorrichtung wiederum bewegt den Stempel.

Bei mehreren Aufnahmeräumen und somit mehreren Stempeln, können die mehreren Übertragungsvorrichtungen mit jeweils einer eigenen Antriebsvorrichtung bewegt werden. Alternativ ist eine Getriebevorrichtung vorgesehen, die das Drehmoment von einer Übertragungsvorrichtung auf zumindest eine weitere Übertragungsvorrichtung überträgt, wodurch mit nur einer Antriebsvorrichtung zumindest zwei Stempel bewegbar sind.

Die jeweilige Übertragungsvorrichtung ist vorzugsweise im Gehäuse geführt. Ein Ende der Übertragungsvorrichtung ist mit dem Stempel verbunden. Das andere Ende der Übertragungsvorrichtung ist mit der Antriebsvorrichtung verbunden; oder aber die Übertragungsvorrichtung ist über die Getriebevorrichtung mit einer anderen Übertragungsvorrichtung gekoppelt.

Die Übertragungsvorrichtung ist vorzugsweise eine Spindel. Die Spindel ist dabei in einem gehäusefesten Innengewinde geführt. Dieses Innengewinde führt die Spindel und stützt gleichzeitig die Spindel gegenüber dem Gehäuse ab.

Die Verbindung zwischen Spindel und Stempel ist vorzugsweise nicht drehmomentübertragend, sodass der Stempel nicht zusammen mit der Spindel dreht, sondern sich lediglich entlang der Stempelachse linear bewegt. Dadurch wird vermieden, dass der Beutel mit Drehmoment belastet wird.

Die Antriebsvorrichtung und die Übertragungsvorrichtung können grundsätzlich beliebig ausgestaltet sein. Beispielsweise kann die Betätigungsvorrichtung auch ein im Gehäuse linear beweglicher Stab sein, der beispielsweise über eine als Hebel ausgebildete Antriebsvorrichtung bewegt wird. Dieser Hebel stützt sich dabei auf dem Gehäuse ab.

Die Antriebsvorrichtung ist vorzugsweise für den Handbetrieb ausgebildet. Hierzu umfasst die Antriebsvorrichtung insbesondere eine Kurbel oder ein Rad, um beispielsweise die oben beschriebene Spindel zu drehen.

Vorzugsweise ist zwischen der drehbaren Antriebsvorrichtung und der Übertragungsvorrichtung ein 90°-Umlenkgetriebe angeordnet. Die Drehachse der Kurbel bzw. des Rades steht somit senkrecht zur Stempelachse bzw. Spindel.

Bevorzugt ist das Innengewinde zur Entnahme und/oder Schnellverstellung der Spindel zerstörungsfrei teilbar. Insbesondere umfasst das Innengewinde zumindest zwei Innengewindeteile die senkrecht zur Stempelachse auseinanderbewegbar sind.

Vorzugsweise sind im Stützbereich zwei gegenüberliegende Gewindeträger angeordnet. An jedem Gewindeträger ist ein Innengewindeteil befestig oder integral ausgebildet. Die Gewindeträger sind im Stützbereich senkrecht zur Stempelachse beweglich aufgenommen, beispielsweise linearbeweglich oder drehbeweglich. Bevorzugt sind die Gewindeträger mittels eines Anschlags gegen ein vollständiges herausziehen oder herausschwenken aus dem Stützbereich gesichert.

Die Gewindeträger sind vorzugsweise mit einem beweglichen Sicherungselement gegenüber dem Stützbereich, insbesondere Gehäuse, lagefixiert. Die Sicherungselemente sind vorzugsweise werkzeuglos lösbar.

Wenn die Übertragungsvorrichtung als linear beweglicher Stab ausgebildet ist, umfasst die Antriebsvorrichtung für den Handbetrieb beispielsweise einen Hebel.

Grundsätzlich kann die Antriebsvorrichtung auch einen Elektromotor zum Antreiben der Übertragungsvorrichtung aufweisen. Bevorzugt wird jedoch der Handbetrieb, da sich dadurch eine einfache und wartungsarme Ausgestaltung des Dosierspenders ergibt.

Das Gehäuse umfasst vorzugsweise einen Stützbereich. An dem Stützbereich ist die Übertragungsvorrichtung geführt und/oder abgestützt. Alternativ kann an dem Stützbereich auch die Antriebsvorrichtung abgestützt sein. Dies ist beispielsweise der Fall, wenn die Antriebsvorrichtung als Hebel ausgebildet ist und sich der Hebel am Gehäuse, nämlich dem Stützbereich, abstützt. Bei der Ausgestaltung als Spindel dient die Aufnahme des Innengewindes im Gehäuse als Stützbereich, da über das Innengewinde sowohl die Führung als auch die Abstützung der Übertragungsvorrichtung, nämlich der Spindel, erfolgt. Des Weiteren umfasst das Gehäuse den Auflagebereich, der bereits beschrieben wurde. Der Auflagebereich ist insbesondere die Boden-Außenwandung des Gehäuses am ersten Ende des Aufnahmeraums oder der Aufnahmeraum-Boden. Auf dem Auflagebereich liegt der Beutel auf.

In dem Gehäuse ist vorzugsweise ein Technikraum ausgebildet. Dieser Technikraum ist insbesondere durch eine Trennwand innerhalb des Gehäuses abgegrenzt. In dem Technikraum befindet sich zumindest eine elektrische und/oder elektronische Komponente des Dosierspenders.

Der Technikraum kann zusätzlich oder alternativ an anderer Stelle, zum Bespiel in einer Bodenplatte, integriert sein.

In bevorzugter Ausführung ist der Technikraum von außen zu öffnen, beispielsweise über einen Deckel in der Seiten-Außenwandung des Gehäuses.

Der Technikraum ist über die Trennwand vorzugsweise flüssigkeitsdicht gegenüber dem restlichen Gehäuse abgedichtet. Dadurch kann im Bedarfsfall eine Reinigung des Aufnahmeraums und ggf. auch des restlichen Gehäuses im Inneren erfolgen, ohne dass Wasser in den Technikraum eintritt. Ebenso dichtet die Trennwand das restliche Gehäuse gegenüber dem Technikraum ab, so dass keine Verschmutzung aus dem Technikraum in das restliche Gehäuse eindringen kann.

Wie bereits beschrieben, kann eine aktive Temperierung verwendet werden. Wird der Aufnahmeraum beispielsweise mit einer Wärmeträgerflüssigkeit temperiert, so befindet sich vorzugsweise der zugehörige Kompressor und die entsprechende Steuerung im Technikraum.

Des Weiteren ist bevorzugt vorgesehen, dass im Technikraum eine Datenschnittstelle für kabelgebundene und/oder drahtlose Datenübertragung angeordnet ist. Über diese Datenschnittstelle können beispielsweise Informationen von Sensoren des Dosierspenders weitergeleitet werden.

Des Weiteren ist bevorzugt vorgesehen, dass in dem Technikraum ein Steuergerät angeordnet ist, das Daten der Sensoren erfassen und/oder auswerten kann.

Der Dosierspender umfasst vorzugsweise zumindest einen Qualitätssensor. Der Qualitätssensor ist insbesondere dazu ausgebildet, eine Temperatur oder sonstige Beschaffenheit des Produkts zu erfassen. Die Temperatur des Produktes kann indirekt, beispielsweise an der Innen- oder Außenseite der Aufnahmeraum-Wandung erfasst werden. Insbesondere befindet sich der Qualitätssensor zur Erfassung der Temperatur an der Innenseite der Aufnahmeraum-Wandung oder am Auflagebereich des Beutels, sodass unmittelbar die Temperatur an der Außenseite des Beutels erfasst werden kann. Ferner ist bevorzugt ein Qualitätssensor zur Erfassung der Temperatur an der Unterseite des Stempels und/oder an der Auslassöffnung angeordnet.

Des Weiteren ist bevorzugt vorgesehen, dass der Qualitätssensor als optischer Sensor ausgebildet ist und somit ein Licht durch den durchsichtigen Beutel hindurch auf das Produkt abstrahlen kann. Der Sensor erfasst dabei die Reflexion des Lichtes und kann basierend auf dieser Reflexion auf Qualitätszustände des Produktes schließen, z. B. auf Wasser- bzw. Serumlässigkeit (Phasentrennung), Farbveränderung, Veränderung der optischen Dichte, usw.

Vorzugsweise ist ein optischer Qualitätssensor an der Auslassöffnung zum Erkennen von Verschmutzungen angeordnet.

Vorzugsweise umfasst der Dosierspender einen Abstandssensor, der angeordnet ist, einen Abstand des Stempels zu einem Fixpunkt im Dosierspender zu erfassen. Aus dem erfassten Abstand kann z.B. die Füllmenge geschätzt werden. Der Abstandssensor misst den Abstand vorzugsweise optisch, insbesondere mittels einer Infrarotlichtquelle, oder mittels Ultraschall.

Besonders bevorzugt sind Teile des Dosierspenders oder der gesamte Dosierspender in einem additiven Fertigungsverfahren aus Kunststoff oder Metall gefertigt. Insbesondere sind folgende Teile additiv gefertigt:
- die Boden-Außenwandung und/oder die Seiten-Außenwandung und/oder der Stützbereich und/oder der Auflagebereich und/oder die Trennwand; und/oder
- die Aufnahmeraum-Wandung und/oder der Aufnahmeraum-Boden; und/oder
- die Antriebsvorrichtung und/oder die Übertragungsvorrichtung und/oder das Innengewinde und/oder der Stempel und/oder die Getriebevorrichtung; und/oder
- der Ständer, insbesondere einen abgeschlossenen Raum bildend.

Vorzugsweise sind folgende Teile zusammen und somit einstückig miteinander additiv gefertigt:
- die Boden-Außenwandung mit der Seiten-Außenwandung, vorzugsweise mit dem Stützbereich und/oder mit dem Auflagebereich und/oder mit der Trennwand und/oder mit der Aufnahmeraum-Wandung; oder
- die Boden-Außenwandung mit der Seiten-Außenwandung, vorzugsweise mit dem Stützbereich und/oder mit der Trennwand, als ein erstes Teil; und die Aufnahmeraum-Wandung zusammen mit dem Aufnahmeraum-Boden als ein zweites Teil.

Ferner ist ein modularer Aufbau vorgesehen, bei dem vorzugsweise folgende Teile zerstörungsfrei lösbar (und somit auswechselbar) angeordnet sind:
- Stützbereich, insbesondere mit Innengewinde, auswechselbar an restlichem Gehäuse befestigt; und/oder
- Aufnahmeraum-Wandung mit Aufnahmeraum-Boden auswechselbar an restlichem Gehäuse befestigt.

Besonders bevorzugt ist zumindest eine Gehäusewandung, insbesondere Seiten-Außenwandung, des Dosierspenders in zumindest zwei Einzelteilen im additiven Fertigungsverfahren gefertigt, wobei die beiden Einzelteile vorzugsweise mittels einer Nut-Feder-Verbindung verbunden sind. Bevorzugt ist die Nut und/oder die Feder integraler, additiv gefertigter Bestandteil des jeweiligen Einzelteils. Bevorzugt sind die Einzelteile jeweils ringförmig, insbesondere geschlossen ringförmig, wobei die Trennebene und somit Nut und Feder senkrecht zur Stempelachse verlaufen; oder segmentförmig, wobei die Trennebene und somit Nut und Feder parallel zur Stempelachse verlaufen.

Besonders bevorzugt ist die Aufnahmeraum-Wandung des Dosierspenders in zumindest zwei Einzelteilen im additiven Fertigungsverfahren gefertigt, wobei die beiden Einzelteile vorzugsweise mittels einer Nut-Feder-Verbindung verbunden sind. Bevorzugt ist die Nut und/oder die Feder integraler, additiv gefertigter Bestandteil des jeweiligen Einzelteils. Bevorzugt sind die Einzelteile jeweils ringförmig, insbesondere geschlossen ringförmig, wobei die Trennebene und somit Nut und Feder senkrecht zur Stempelachse verlaufen; oder segmentförmig, wobei die Trennebene und somit Nut und Feder parallel zur Stempelachse verlaufen.

Ein Einzelteil kann dabei auch einen Teil der Seiten-Außenwandung und einen Teil der Aufnahmeraum-Wandung bilden.

Vorzugsweise ist das Gehäuse, insbesondere die Außenseite des Gehäuses, so ausgestaltet, dass der Benutzer, unabhängig von etwaigem Analphabetismus oder Sprachbarrieren, die Art des zähflüssigen Produktes erkennt. Insbesondere durch die Verwendung der additiven Fertigung zur Herstellung des Gehäuses ist es möglich, relativ kleine Stückzahlen unterschiedlicher Größe und in unterschiedlichem Design herzustellen, um so für jedes Produkt ein individuelles Gehäuse zu gestalten.

So ist bevorzugt vorgesehen, dass das Gehäuse eine Form aufweist, insbesondere auch eine Farbe und/oder grafische Gestaltung, die einer handelsüblichen Produktverpackung des zähflüssigen Produkts entspricht. Insbesondere weist hierzu das Gehäuse eine Form, insbesondere auch Farbe und/oder grafische Gestaltung,
- eines Glases mit Deckel (beispielhafte Produkte: Marmelade, Schokocreme, Honig, Salbe, Pesto usw.)
- oder einer Tube (beispielhafte Produkte: Zahnpasta, Tomatenmark, Salbe, Creme usw.)
- oder eines Kunststoffflaschenbehälters (beispielhafte Produkte: Spülmittel, Reinigungsmittel, Flüssigseife, Motoröl, Waschmittel, Speiseöl usw.),
auf.

Des Weiteren ist bevorzugt vorgesehen, dass das Gehäuse eine Form, insbesondere auch Farbe und/oder grafische Gestaltung, aufweist, die auf die Herkunft und/oder Herstellung des zähflüssigen Produkts hinweist. Insbesondere ist hierbei vorgesehen, dass das Gehäuse die Gestalt einer Milchkanne, eines Käselaibs, eines Stücks aus einem Käselaib, eines Bienenstocks, einer Bienenwabe oder eines milchgebenden Säugetiers (beispielsweise Kuh, Ziege oder Schaf) aufweist.

Die Milchkanne charakterisiert sich insbesondere durch einen unteren zylindrischen Abschnitt und einen oberen zylindrischen Abschnitt des Gehäuses, wobei die beiden zylindrischen Abschnitte durch einen konischen Abschnitt des Gehäuses verbunden sind, und wobei der obere zylindrische Abschnitt einen geringeren Durchmesser aufweist als der untere zylindrische Abschnitt.

Das Gehäuse in Form eines Käselaibs charakterisiert sich insbesondere durch dessen zylindrische Ausgestaltung, wobei der Durchmesser wesentlich größer ist als die Höhe. Bei der Ausgestaltung als ein "Stück des Käselaibs" würde das Gehäuse in seiner äußeren Form einem Segment des Käselaibs entsprechen.

Die charakteristische Form des Gehäuses als "Bienenstock" ist insbesondere kuppelförmig auf der Oberseite und ggf. zylindrisch im unteren Bereich.

Des Weiteren ist bevorzugt vorgesehen, dass das Gehäuse eine Form, insbesondere auch Farbe und/oder grafische Gestaltung, aufweist, die auf das zähflüssige Produkt selbst bzw. einen Bestandteil des zähflüssigen Produkts hinweist. Umfasst das Produkt beispielsweise eine bestimmte Frucht, beispielsweise eine Kirsche für Kirschmarmelade, oder Gemüse, so kann das Gehäuse in Form der entsprechenden Frucht oder des entsprechenden Gemüses ausgestaltet sein.

Die Erfindung umfasst ferner eine Anordnung aus Dosierspender mit gefülltem Beutel. Der Beutel umfasst dabei insbesondere ein Ventil, insbesondere ausgebildet als Membranventil oder Quetschventil. Der Beutel ist insbesondere aus Kunststoff. In dem Beutel befindet sich insbesondere das zähflüssige Produkt, wie es bereits beschrieben wurde.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Figur 1: eine Schnittansicht eines erfindungsgemäßen Dosierspenders gemäß einem Ausführungsbeispiel,
- Figuren 2 und 3: zwei seitliche Ansichten des erfindungsgemäßen Dosierspenders gemäß dem Ausführungsbeispiel,
- Figur 4: einen schematischen Querschnitt des erfindungsgemäßen Dosierspenders gemäß dem Ausführungsbeispiel,
- Figur 5: drei Darstellungen eines erfindungsgemäßen Dosierspenders gemäß einem weiteren Ausführungsbeispiel,
- Figur 6: drei Darstellungen eines erfindungsgemäßen Dosierspenders gemäß einem weiteren Ausführungsbeispiel,
- Figur 7: drei Darstellungen eines erfindungsgemäßen Dosierspenders gemäß einem weiteren Ausführungsbeispiel,
- Figur 8: einen erfindungsgemäßen Dosierspender gemäß einem weiteren Ausführungsbeispiel,
- Figuren 9 bis 14: mehrere Ansichten und Details eines erfindungsgemäßen Dosierspenders gemäß einem weiteren Ausführungsbeispiel, und
- Figur 15: eine Variante für den Stützbereich für alle Ausführungsbeispiele.

Im Folgenden wird anhand der Figuren ein Dosierspender 1 im Detail beschrieben.

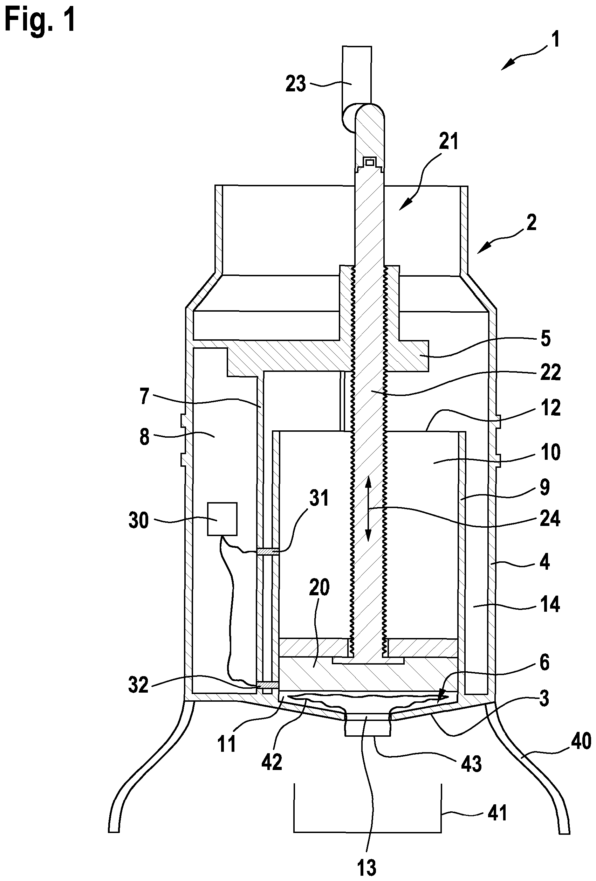

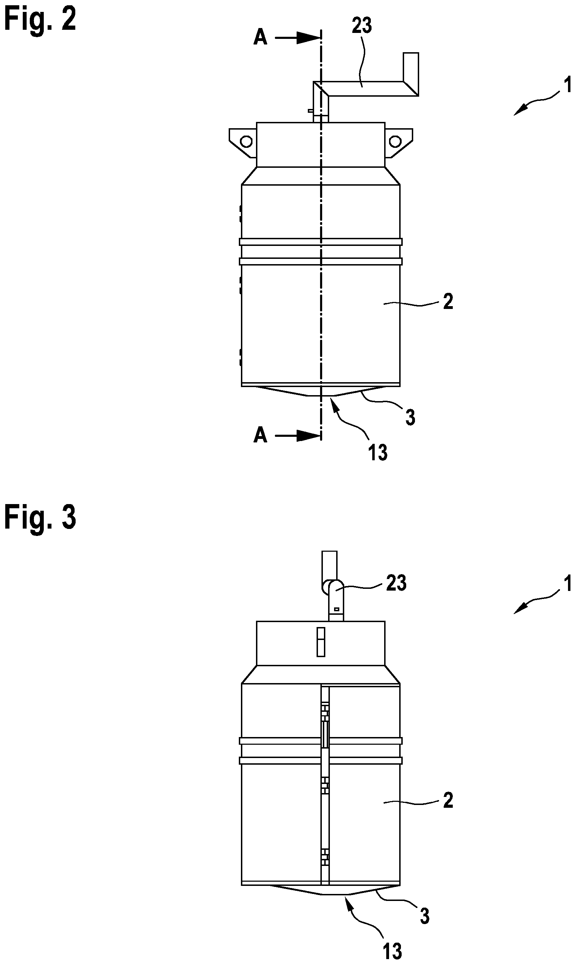

Figur 1 zeigt einen Schnitt A: A, dessen Schnittebene in Figur 2 gekennzeichnet ist.

Der Dosierspender 1 umfasst ein Gehäuse 2. Das Gehäuse 2 weist eine Boden-Außenwandung 3 und eine zylindrische Seiten-Außenwandung 4 auf. Des Weiteren sind in dem Gehäuse 2 ein Stützbereich 5 und ein Aufnahmebereich, gebildet durch einen Beutelauflageboden 6, ausgebildet.

Im Inneren umfasst das Gehäuse 2 eine Trennwand 7 zum Abtrennen eines Technikraums 8.

Des Weiteren ist in dem Gehäuse 2 ein Aufnahmeraum 10 ausgebildet. Der Aufnahmeraum 10 ist begrenzt durch eine zylindrische Aufnahmeraum-Wandung 9.

Der Aufnahmeraum 10 weist unten ein erstes Ende 11 und oben ein zweites Ende 12 auf. Das obere zweite Ende 12 ist über den vollen Umfang des Aufnahmeraums 10 offen.

Das erste Ende 11 des Aufnahmeraums 10 ist durch einen Bereich der Boden-Außenwandung 3 begrenzt. Dieser Bereich der Boden-Außenwandung 3 bildet auch den Auflagebereich 6.

Am ersten Ende 11 des Aufnahmeraums 10 und somit in der Boden-Außenwandung 3 befindet sich eine Auslassöffnung 13. Zu dieser Auslassöffnung 13 hin ist der Auflagebereich 6 konisch bzw. trichterförmig ausgebildet.

Zwischen der Seiten-Außenwandung 4 und der Aufnahmeraum-Wandung 9 befindet sich ein ringförmiger Freiraum 14, der, wie bereits beschrieben, beispielsweise für eine Temperierung und/oder Dämmung genutzt werden kann.

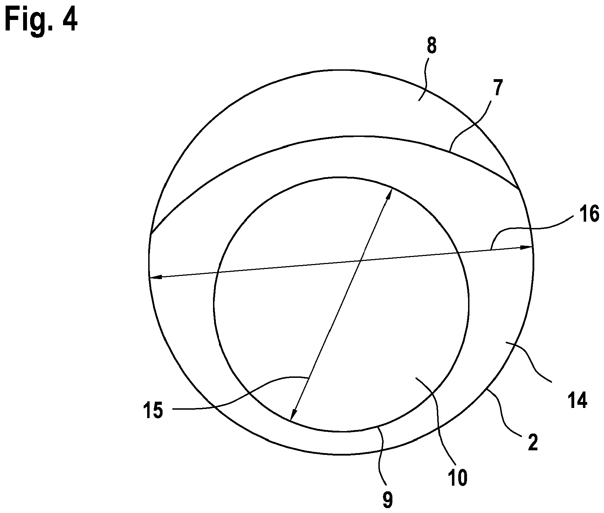

Figur 4 zeigt rein schematisch einen Aufnahmeraum-Durchmesser 15 und einen Gehäuse-Durchmesser 16. Insbesondere ist vorgesehen, dass der Gehäuse-Durchmesser 16 höchstens das Dreifache, vorzugsweise höchstens das Zweifache, des Aufnahmeraum-Durchmessers 15 beträgt. Die Durchmesser und Höhen sind entsprechend ausgebildet, sodass das Aufnahmevolumen des Aufnahmeraums 10 für den beschriebenen Einsatzbereich ausgebildet ist, wie diese im einleitenden Teil beschrieben wurde.

Der Dosierspender 1 umfasst ferner einen Stempel 20. Der Stempel 20 ist im Aufnahmeraum 10 angeordnet. Ein Außendurchmesser des Stempels 20 entspricht im Wesentlichen einem Innendurchmesser des Aufnahmeraums 10.

Der Stempel 20 ist innerhalb des Aufnahmeraums 10 entlang der eingezeichneten Stempelachse 24 linear beweglich.

Der Dosierspender 1 umfasst ferner eine Betätigungsvorrichtung 21. Die Betätigungsvorrichtung 21 umfasst eine Übertragungsvorrichtung 22, hier ausgebildet als Spindel, und eine Antriebsvorrichtung 23, hier ausgebildet als Kurbel. Die Übertragungsvorrichtung 22 ist in einem Innengewinde geführt und abgestützt. Dieses Innengewinde befindet sich im Stützbereich 5 des Gehäuses. Die Antriebsvorrichtung 23 ist hier ausschließlich für den Handbetrieb ausgebildet.

Das untere Ende der Übertragungsvorrichtung 22 ist drehbeweglich mit dem Stempel 20 verbunden, sodass das Drehmoment nicht auf den Stempel 20 übertragen wird.

Wie insbesondere Figur 1 zeigt, kann der Dosierspender 1 einen Ständer 40 umfassen, sodass das Gehäuse 2 von einer Aufstandsfläche beabstandet ist. Dadurch ist es möglich, unter das Gehäuse 2 einen Behälter 41 zur Aufnahme des zähflüssigen Produktes zu stellen.

Figur 1 zeigt rein schematisch, dass in dem Aufnahmeraum 10 ein Beutel 42 mit dem zähflüssigen Produkt angeordnet werden kann. Der Beutel 42 ragt insbesondere mit seinem Ventil 43 aus der Auslassöffnung 13 nach außen. Bei dem in Figur 1 gezeigten Zustand ist der Stempel 20 an seiner untersten Position und der Beutel 42 bereits entleert. Die Ausführung des Ventils 43 stellt hygienische Ansprüche sicher, insbesondere die Abtrennung des inneren des Beutels 42 zum äußeren Umgebungsraum in denjenigen Zeiträumen, in denen keine Abfüllvorgänge aktiv sind.

Rein schematisch zeigt Figur 1 die Anordnung eines Steuergerätes 30 in dem Technikraum 8. Ferner zeigt Figur 1 rein schematisch die Anordnung zumindest eines Qualitätssensors 31 in der Aufnahmeraum-Wandung 9 und eines Positionssensors 32. Der Positionssensor 32 befindet sich insbesondere im unteren Bereich des Aufnahmeraums 10, sodass er erfassen kann, wenn der Stempel 20 unten ist und der Beutel 42 entleert ist.

Wie im allgemeinen Teil bereits beschrieben, kann der Technikraum 8 für diverse weitere elektrische und/oder elektronische Komponenten genutzt werden.

Der Technikraum 8 ist hier über die Trennwand 7 flüssigkeitsdicht gegenüber dem restlichen Innenraum des Gehäuses 2 abgedichtet. Etwaige Durchführungen für Sensoren und/oder Kabel werden entsprechend ebenfalls abgedichtet.

Insbesondere Figur 3 zeigt, dass ein Teil der Seiten-Außenwandung 4 des Gehäuses 2 über ein Scharnier mit dem restlichen Gehäuse 2 verbunden ist. Dadurch kann dieser Bereich der Seiten-Außenwandung 4 geöffnet werden, wodurch das Innere des Gehäuses 2 zugänglich ist.

Diese Öffnung bzw. Trennebene des Gehäuses ist nur beispielhaft gezeigt hier. Alternativ ist es insbesondere auch möglich, das Gehäuse 2 von oben zu öffnen.

Durch Öffnen der Seiten-Außenwandung 4 ist der Aufnahmeraum 10 zugänglich. Zum Nachfüllen des Beutels 42 kann die Aufnahmeraum-Wandung 9 eine entsprechende Nachfüllöffnung aufweisen. Wie bereits beschrieben, kann zusätzlich oder alternativ zur Nachfüllöffnung auch das zweite Ende 12 an der Oberseite des Aufnahmeraums 10 zum Entnehmen des Stempels 20 und/oder zum Einsetzen des Beutels 42 genutzt werden. "Nachfüllen" bedeutet, dass der leere Beutel 42 entnommen und ein voller Beutel 42 eingesetzt wird.

Des Weiteren ist es auch möglich, dass ein Teil der Aufnahmeraum-Wandung 9 durch die Seiten-Außenwandung 4 gebildet ist. Wird eine Öffnung bzw. ein Deckel in diesem Bereich angeordnet, so ist der Aufnahmeraum 10 unmittelbar von außen und nur durch Öffnen eines Deckels zugänglich.

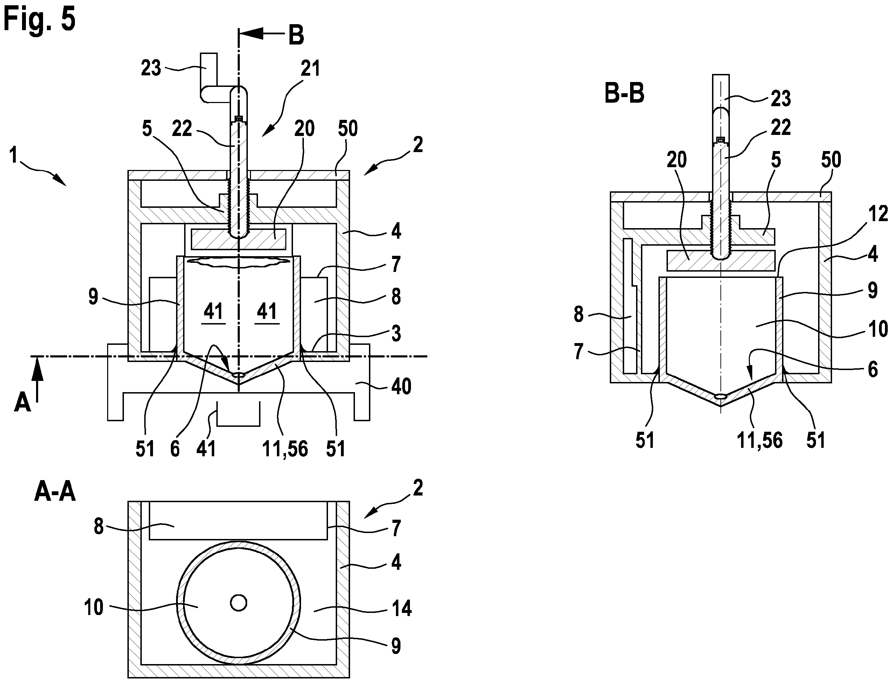

Figur 5 zeigt ein Ausführungsbeispiel mit einem Aufnahmeraum 10 in dem zwei Beutel 42 angeordnet sind, sodass ein Zweiphasen-Produkt abgegeben werden kann.

Beispielhaft für alle Ausführungen zeigt Figur 5 eine alternative Ausgestaltung, bei der der Aufnahmeraum 10 einen eigenen Aufnahmeraum-Boden 56 mit der Auslassöffnung 13 aufweist. Das Gebilde aus Aufnahmeraum-Wandung 9 und Aufnahmeraum-Boden 56 ist vorzugsweise additiv gefertigt.

Das Gebilde steckt in einer Aussparung in der Boden-Außenwandung 3 und ist vorzugsweise über eine Steckverbindung 51 zerstörungsfrei lösbar und somit auswechselbar befestigt.

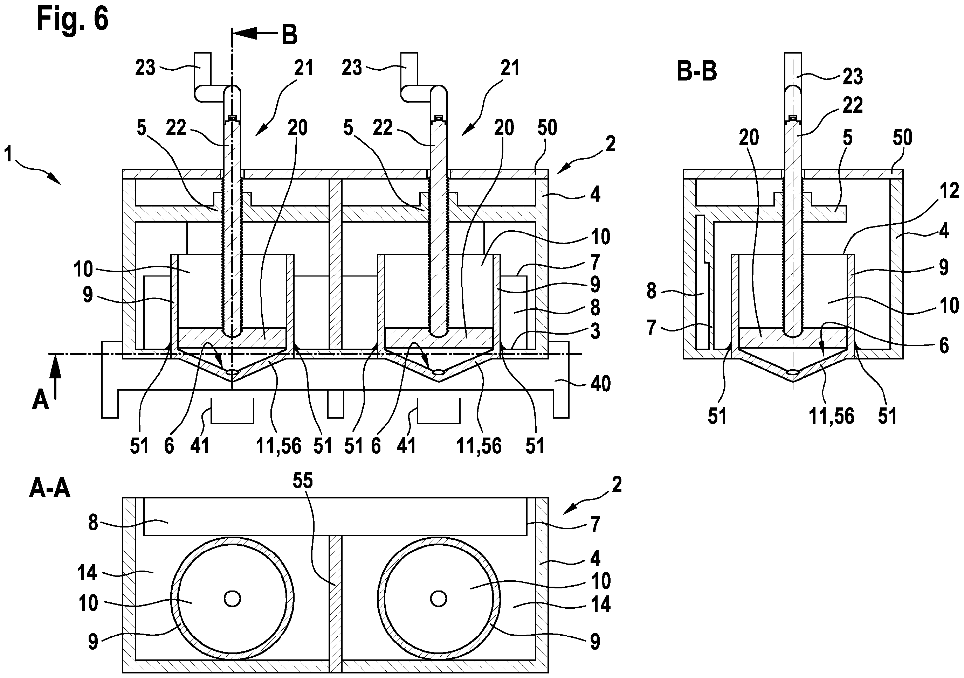

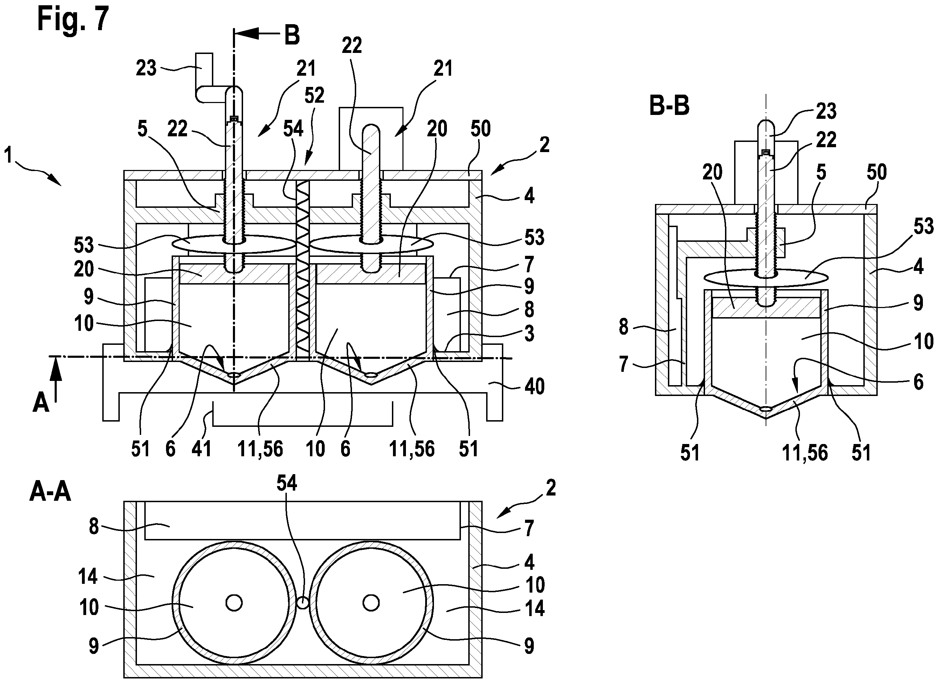

Figuren 6 und 7 zeigen Ausführungen mit zwei Aufnahmeräumen 10. Das erste Ende 11 der Aufnahmeräume kann dabei, wie dargestellt, durch den Aufnahmeraum-Boden 56, oder wie im ersten Ausführungsbeispiel durch die Boden-Außenwandung 3 gebildet sein.

Über eine Zwischenwand 55 können zwei getrennte Freiräume 14 gebildet sein.

Figur 6 zeigt zwei Betätigungsvorrichtungen 21 mit jeweils einer eigenen Antriebsvorrichtung 23 (Kurbel).

Figur 7 zeigt, dass eine Übertragungsvorrichtung 22 über eine Getriebevorrichtung 52 mit der anderen Übertragungsvorrichtung 22 verbunden ist. Dementsprechend ist nur eine Antriebsvorrichtung 23 vorgesehen, um gleichzeitig beide Stempel 20 zu betätigen. Hier wird ein Zweiphasen-Produkt über zwei Aufnahmeräume 10 abgegeben.

Die Getriebevorrichtung 52 umfasst ein Zahnrad 53 auf der einen Übertragungsvorrichtung 22 und ein Zahnrad 53 auf der anderen Übertragungsvorrichtung 22. Die beiden Zahnräder 53 stehen jeweils mit einer freidrehenden Schnecke 54 in Eingriff.

Ferner zeigen die Figuren 5 bis 7 beispielhaft für alle Ausführungen, dass das Gehäuse 2 einen Deckel 50 aufweisen kann, sodass das Innere des Gehäuses 2 von oben zugänglich ist.

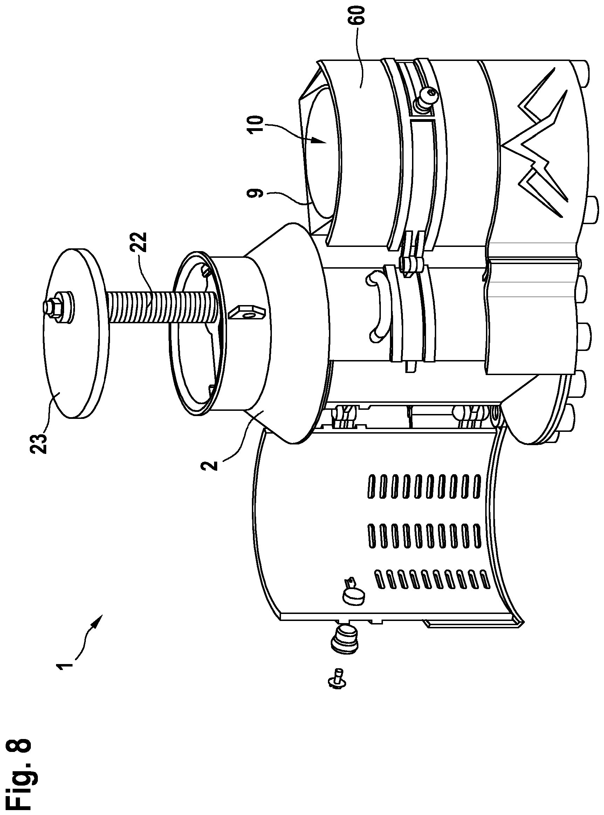

Figur 8 zeigt beispielhaft für alle Ausführungen eine Variante bei der die Aufnahmeraum-Wandung 9 samt Beutelauflageboden 6, also der gesamte Aufnahmeraum 10, zum Befüllen des Aufnahmeraums 10 seitlich aus dem Gehäuse 2 herausschwenkbar ist. Hierzu sind die Aufnahmeraum-Wandung 9 und der Beutelauflageboden 6 fest mit einem Gehäusedeckel 60 in der Seiten-Außenwandung 4 des Gehäuses 4 verbunden oder integral gefertigt. Diese gesamte Einheit aus Aufnahmeraum-Wandung 9, Beutelauflageboden 6 und Gehäusedeckel 60 ist aus dem Gehäuse 2 herausschwenkbar. Der Gehäusedeckel 60 ist über ein Scharnier mit der Seiten-Außenwandung 4 verbunden.

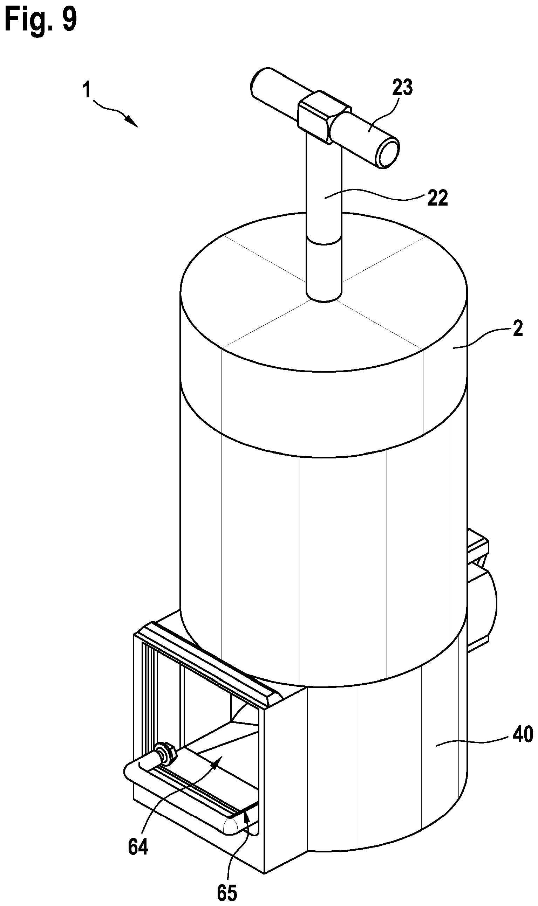

Figuren 9 bis 14 zeigen anhand einer weiteren Variante des Dosierspenders 1 unterschiedliche Merkmale, insbesondere für die Temperierung und Dämmung. Diese Merkmale können einzeln oder in Kombination an allen Ausführungen des Dosierspenders 1 zur Anwendung kommen.

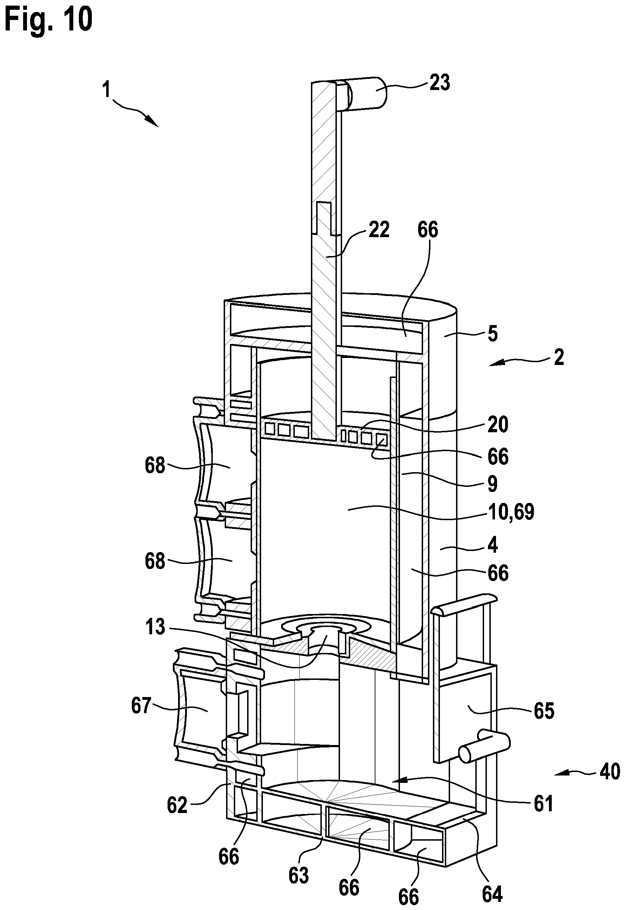

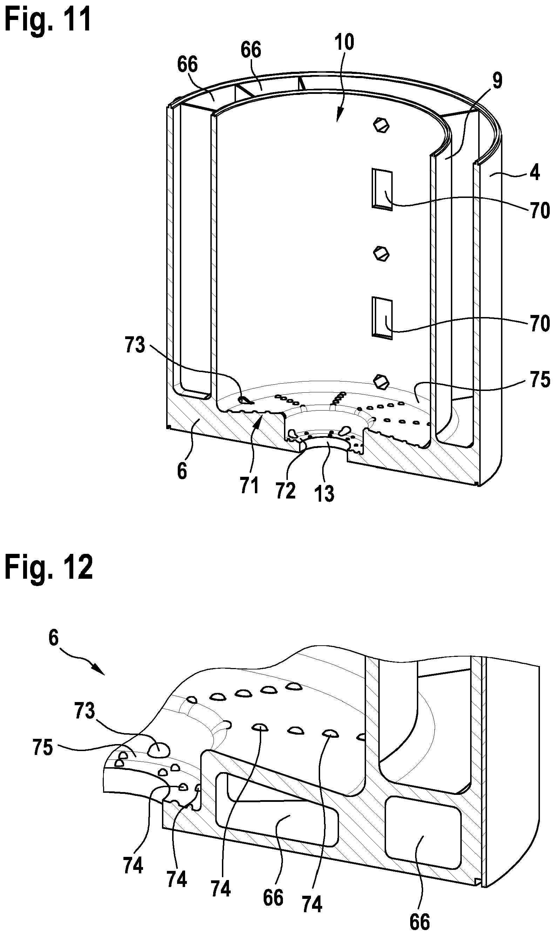

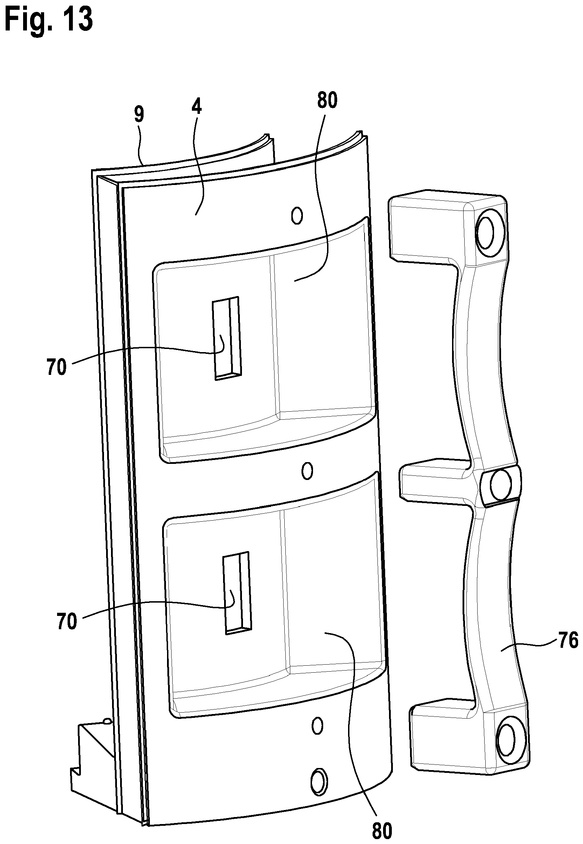

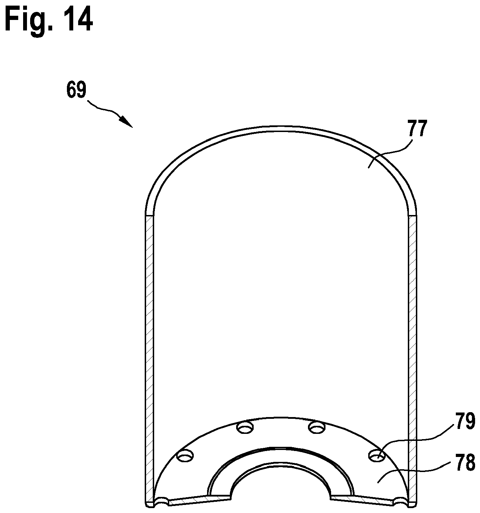

Figur 9 zeigt den gesamten Dosierspender 1 samt geschlossenem Ständer 40. Figur 10 zeigt eine Schnittansicht zu Figur 9. Figur 11 zeigt eine Schnittansicht des Aufnahmeraums 10. Figur 12 zeigt eine Schnittansicht des Beutelauflagebodens 6. Figur 13 zeigt einen Teilbereich einer Außenseite des Gehäuses 2. Figur 14 zeigt ein Inlay 69.

Im Folgenden wird auf die Figuren 9 bis 14 Bezug genommen.

Der Ständer 40 bildet hier einen geschlossenen Abgaberaum 61 mit Ständer-Seitenwand 62 und Ständer-Boden 63. Die Ständer-Seitenwand 62 umgibt einen geschlossenen Abgaberaum 61 vollständig mit der Ausnahme einer in der Ständer-Seitenwand 62 ausgesparten Ständer-Öffnung 64 zum Einsetzen des Behälters 41, wobei an der Ständer-Öffnung 64 ein Ständer-Deckel 65 zum Verschließen der Ständer-Öffnung 64 angeordnet ist.

Die Ständer-Seitenwand 62 und der Ständer-Boden 63 weisen jeweils zumindest einen Hohlraum 66 zur thermischen Dämmung, vorzugsweise gefüllt mit thermisch dämmendem Material, auf.

Der Beutelauflageboden 6 umfasst einen ringförmigen Außenbereich 71 und einen gegenüber dem Außenbereich 71 tiefer liegenden Ventilauflagebereich 72. Der Ventilauflagebereich 72 ist insbesondere ringsum der Auslassöffnung 13 ausgebildet. Der Beutelauflageboden 6, hier der Außenbereich 71, ist derart konisch ausgebildet, so dass er radial außen niedriger ist als radial innen. Dadurch fließt Kondenswasser radial nach außen.

Der Außenbereich 71 und der Ventilauflagebereich 72 umfassen jeweils zumindest eine Kondenswasser-Abflussöffnung 73 und eine Kondenswasser-Sammelrinne 75 sowie Fortsätze 74 als Noppen, zur Beabstandung des Beutels 42.

Es ist ein Ständer-Temperieraggregat 67 zum aktiven Temperieren des Abgaberaums 61 vorgesehen, wobei das Ständer-Temperieraggregat 67 an der Ständer-Seitenwand 62 angeordnet ist.

Der Freiraum 14 ist hier als Hohlraum 66 zwischen einer Doppelwand ausgebildet. Die Doppelwand ist innen durch die Aufnahmeraum-Wandung 9 und außen durch die Seiten-Wandung 4 des Gehäuses 2 gebildet. Der Hohlraum 66 dient zur thermischen Dämmung, und ist vorzugsweise mit thermisch dämmendem Material gefüllt.

Der Dosierspender 1 umfasst zwei Aufnahmeraum-Temperieraggregate 68, die radial außerhalb der Aufnahmeraum-Wandung 9 angeordnet sind.

Im Gehäuse 2 sind zwei Aggregaträume 80 gebildet, die radial innen durch die Aufnahmeraum-Wandung 9 begrenzt sind und radial außen offen sind, wobei das jeweilige Aufnahmeraum-Temperieraggregat 68 teilweise in dem zugehörigen Aggregatraum 80 angeordnet ist.

Die Aggregaträume 80 weisen in der Aufnahmeraum-Wandung 9 Kühlöffnungen 70 für einen direkten Kontakt des Aufnahmeraum-Temperieraggregats 68 zum Inlay 69 auf.

Ein Haltebügel 76 fixiert beide Aufnahmeraum-Temperieraggregate 68 am Gehäuse 2.

Im Aufnahmeraum 10 ist ein metallenes Inlay 69 zur Übertragung von Kälte- oder Wärmeleistung auf den Beutel 42 angeordnet, wobei das Inlay 69 (siehe Halbschnitt in Figur 14) einen vollumfänglichen Rohrbereich 77 und einen ringförmigen Bodenbereich 78 umfasst.

Im Bodenbereich 78 sind Kondenswasser-Aussparungen 79 zum Durchleiten des Kondenswassers nach unten zum Beutelauflageboden 6 ausgebildet.

Der Beutelauflageboden 6 weist Hohlräume 66 zur thermischen Dämmung, vorzugsweise gefüllt mit thermisch dämmendem Material, auf.

Der Stempel 20 weist Hohlräume 66 zur thermischen Dämmung, vorzugsweise gefüllt mit thermisch dämmendem Material, auf.

Ein horizontaler Bereich des Gehäuses 2 über dem Aufnahmeraum 10, insbesondere der Stützbereich 5, weist zumindest einen Hohlraum 66 zur thermischen Dämmung, vorzugsweise gefüllt mit thermisch dämmendem Material, auf.

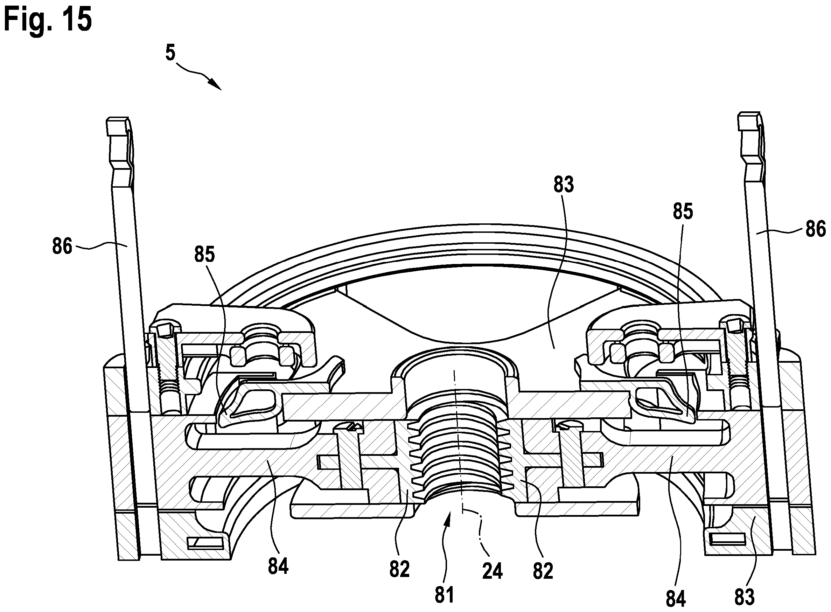

Figur 15 zeig in Schnittansicht eine mögliche Bauweise des Stützbereiches 5 für alle Ausführungsbeispiele, hier ausgebildet als oberer Verschluss des Gehäuses 2. In dem Stützbereich 5 ist ein Innengewinde 81 zur Aufnahme der Übertragungsvorrichtung (Spindel) 22 angeordnet.

Das Innengewinde 81 ist zur Entnahme und/oder Schnellverstellung der Spindel 22 zerstörungsfrei teilbar. Hierzu umfasst das Innengewinde 81 zwei Innengewindeteile 82 die senkrecht zur Stempelachse 24 auseinanderbewegbar sind. Figur 15 zeigt einen Schnitt bei dem von beiden Innengewindeteilen 82 jeweils die Hälfte gezeigt ist.

Im Stützbereich 5 sind zwischen zwei Stützbereichteilen 83 zwei gegenüberliegende Gewindeträger 84 angeordnet. An jedem Gewindeträger 84 ist ein Innengewindeteil 82 befestigt. Die Gewindeträger 84 sind im Stützbereich 5 senkrecht zur Stempelachse 24 linearbeweglich aufgenommen. Die Gewindeträger 84 sind mittels eines Anschlags 85 gegen ein vollständiges Herausziehen gesichert.

Die Gewindeträger 84 sind jeweils mit einem beweglichen Sicherungselement 86 gegenüber dem Stützbereich 5, insbesondere Gehäuse 2, lagefixiert. Die Sicherungselemente 86, hier ausgebildet als Stifte, sind werkzeuglos lösbar. Figur 15 zeigt den gelösten, nach oben gezogenen Zustand der Sicherungselement 86. In diesem Zustand können die beiden Gewindeträger 84 radial nach außen gezogen werden.

Neben der vorstehenden schriftlichen Beschreibung der Erfindung wird zu deren ergänzenden Offenbarung hiermit explizit auf die zeichnerische Darstellung der Erfindung in den Figuren Bezug genommen.

### Bezugszeichenliste

- 1: Dosierspender
- 2: Gehäuse
- 3: Boden-Außenwandung
- 4: Seiten-Außenwandung
- 5: Stützbereich
- 6: Auflagebereich (auch: Beutelauflageboden)
- 7: Trennwand
- 8: Technikraum
- 9: Aufnahmeraum-Wandung
- 10: Aufnahmeraum
- 11: erstes Ende (unteres Ende)
- 12: zweites Ende (oberes Ende)
- 13: Auslassöffnung
- 14: Freiraum
- 15: Aufnahmeraum-Durchmesser
- 16: Gehäuse-Durchmesser
- 20: Stempel
- 21: Betätigungsvorrichtung
- 22: Übertragungsvorrichtung (Spindel)
- 23: Antriebsvorrichtung (Kurbel)
- 24: Stempelachse
- 30: Steuergerät
- 31: Qualitätssensor
- 32: Positionssensor
- 40: Ständer
- 41: Behälter
- 42: Beutel
- 43: Ventil
- 50: Deckel
- 51: Steckverbindung
- 52: Getriebevorrichtung
- 53: Zahnräder
- 54: freidrehende Schnecke
- 55: Zwischenwand
- 56: Aufnahmeraum-Boden
- 60: Gehäusedeckel
- 61: Abgaberaum
- 62: Ständer-Seitenwand
- 63: Ständer-Boden
- 64: Ständer-Öffnung
- 65: Ständer-Deckel
- 66: Hohlraum
- 67: Ständer-Temperieraggregat
- 68: Aufnahmeraum-Temperieraggregat
- 69: Inlay
- 70: Kühlöffnung
- 71: Außenbereich
- 72: Ventilauflagebereich
- 73: Kondenswasser-Abflussöffnung
- 74: Fortsätze
- 75: Kondenswasser-Sammelrinne
- 76: Haltebügel
- 77: Rohrbereich
- 78: Bodenbereich
- 79: Kondenswasser-Aussparung
- 80: Aggregatraum
- 81: Innengewinde
- 82: Innengewindeteile
- 83: Stützbereichteile
- 84: Gewindeträger
- 85: Anschlagselement
- 86: Sicherungselement

## Patentansprüche

1. Dosierspender (1) für Einzelhandel und Gastronomie, umfassend
• ein Gehäuse (2),
• zumindest einen im Gehäuse (2) ausgebildeten Aufnahmeraum (10) zur Aufnahme zumindest eines Beutels (42) mit zähflüssigem Produkt,
• pro Aufnahmeraum (10) jeweils einen im Aufnahmeraum (10) angeordneten Stempel (20) zum Auspressen des zumindest einen Beutels (42),
• pro Stempel (20) eine im Gehäuse (2) geführte und/oder am Gehäuse abgestützte Betätigungsvorrichtung (21) zum linearbeweglichen Betätigen des Stempels (20), und
• zumindest eine Auslassöffnung (13), vorzugsweise genau eine Auslassöffnung (13) pro Aufnahmeraum, für das Produkt, die im Bereich eines ersten Endes (11) des Aufnahmeraums (10) ausgebildet ist,
• wobei der jeweilige Aufnahmeraum durch eine zylindrische Aufnahmeraum-Wandung (9) und am ersten Ende (11) durch einen Beutelauflageboden (6) gebildet ist,
**dadurch gekennzeichnet, dass**
• zwischen der Aufnahmeraum-Wandung (9) und einer Außenwandung, vorzugsweise Seiten-Außenwandung (4), des Gehäuses (2) ein Freiraum (14) gebildet ist.

2. Dosierspender nach Anspruch 1, wobei der Aufnahmeraum (10) ein dem ersten Ende (11) gegenüberliegendes zweites Ende (12) aufweist, wobei der Aufnahmeraum (10) am zweiten Ende (12) über den gesamten Querschnitt offen ist.

3. Dosierspender nach einem der vorhergehenden Ansprüche,
• wobei der Aufnahmeraum (10) mit seinem ersten Ende (11) unmittelbar an eine Außenwandung mit der Auslassöffnung (13), vorzugsweise Boden-Außenwandung (3), des Gehäuses (2) grenzt, wobei diese Außenwandung den Beutelauflageboden (6) bildet oder
• wobei der Aufnahmeraum (10) durch eine zylindrische Aufnahmeraum-Wandung (9) und einen Aufnahmeraum-Boden (56), der den Beutelauflageboden (6) bildet, am ersten Ende (11) gebildet ist, wobei die Auslassöffnung (13) im Aufnahmeraum-Boden (56) ausgebildet ist, wobei das Gebilde aus Aufnahmeraum-Wandung (9) und der Aufnahmeraum-Boden (56) in einer Aussparung der Außenwandung, vorzugsweise Boden-Außenwandung (3), des Gehäuses (2) steckt.

4. Dosierspender nach einem der vorhergehenden Ansprüche, umfassend einen Ständer (40), auf dem das Gehäuse (10) steht, sodass unmittelbar unter die Auslassöffnung(en) (13) ein Behälter (41) zur Aufnahme des Produkts platzierbar ist.

5. Dosierspender nach Anspruch 4, wobei der Ständer (40) einen geschlossenen Abgaberaum (61) mit Ständer-Seitenwand (62) und vorzugsweise Ständer-Boden (63) bildet.

6. Dosierspender nach Anspruch 5, wobei die Ständer-Seitenwand (62) den geschlossenen Abgaberaum (61) vollständig umgibt und in der Ständer-Seitenwand (62) eine Ständer-Öffnung (64) zum Einsetzen des Behälters (41) ausgespart ist,

7. Dosierspender nach einem der Ansprüche 5 oder 6, wobei die Ständer-Seitenwand (62) und/oder der Ständer-Boden (63) jeweils zumindest einen Hohlraum (66) zur thermischen Dämmung, vorzugsweise gefüllt mit thermisch dämmendem Material, aufweist/aufweisen.

8. Dosierspender nach einem der Ansprüche 5 bis 7, umfassend ein Ständer-Temperieraggregat (67) zum aktiven Temperieren des Abgaberaums (61).

9. Dosierspender nach einem der vorhergehenden Ansprüche, wobei die Aufnahmeraum-Wandung (9) eine Nachfüllöffnung und einen die Nachfüllöffnung verschließenden Deckel zum Einsetzten des Beutels (42) umfasst.

10. Dosierspender nach einem der vorhergehenden Ansprüche, wobei die Aufnahmeraum-Wandung (9) samt Beutelauflageboden (6) zum Befüllen des Aufnahmeraums (10) seitlich aus dem Gehäuse (2) entnehmbar, insbesondere herausschwenkbar, sind.

11. Dosierspender nach einem der vorhergehenden Ansprüche wobei der Freiraum (14) um den gesamten Umfang, ggf. unterbrochen von zumindest einem Aggregatraum (80), und/oder entlang der gesamten Höhe der Aufnahmeraum-Wandung (9) gebildet ist.

12. Dosierspender nach einem der vorhergehenden Ansprüche, wobei in dem Freiraum (14), insbesondere ausgebildet als Hohlraum zwischen einer Doppelwand, ein thermisch dämmendes Material angeordnet ist.

13. Dosierspender nach einem der vorhergehenden Ansprüche, umfassend zumindest ein Aufnahmeraum-Temperieraggregat (68), das insbesondere radial außerhalb der Aufnahmeraum-Wandung (9) angeordnet ist.

14. Dosierspender nach Anspruch 13, wobei im Gehäuses (2) ein Aggregatraum (80) gebildet ist, der radial innen durch die Aufnahmeraum-Wandung (9) begrenzt ist, wobei das Aufnahmeraum-Temperieraggregat (68) vollständig oder teilweise in dem Aggregatraum (80) angeordnet ist.

15. Dosierspender nach einem der vorhergehenden Ansprüche, wobei im Aufnahmeraum (10), insbesondere für den direkten Kontakt mit dem Beutel (42), zumindest ein metallenes Inlay (69) zur Übertragung von Kälte- oder Wärmeleistung auf den Beutel (42) angeordnet ist.

## Claims

1. A dosing dispenser (1) for retail and catering, comprising
- a housing (2),
- at least one containing space (10) formed in the housing (2) for containing at least one bag (42) of viscous product,
- for each containing space (10), a plunger (20) arranged in the containing space (10) for pressing out the at least one bag (42),
- for each plunger (20), an operating device (21) guided in the housing (2) and/or supported at the housing for linearly movable operation of the plunger (20), and
- at least one outlet opening (13), preferably exactly one outlet opening (13) per containing space, for the product, which is formed in the region of a first end (11) of the containing space (10),
- wherein the respective containing space is formed by a cylindrical containing space inner wall (9) and at the first end (11) through a bag support bottom (6), **characterized in that**
- a free space (14) is formed between the containing space inner wall (9) and an outer wall, preferably a side outer wall (4), of the housing (2).

2. The dosing dispenser according to claim 1, wherein the containing space (10) comprises a second end (12) lying opposite to the first end (11), wherein the containing space (10) is open at the second end (12) over the entire cross-section.

3. The dosing dispenser according to any of the preceding claims,
- wherein the containing space (10) with its first end (11) directly adjoins an outer wall with the outlet opening (13), preferably bottom outer wall (3), of the housing (2), wherein this outer wall forms the bag support bottom (6), or
- wherein the containing space (10) is formed by a cylindrical containing space inner wall (9) and a containing space bottom (56), which forms the bag support bottom (6), at the first end (11), wherein the outlet opening (13) is formed in the containing space bottom (56), wherein the formation of the containing space inner wall (9) and the containing space bottom (56) is inserted in a recess of the outer wall, preferably the bottom outer wall (3), of the housing (2).

4. The dosing dispenser according to any of the preceding claims, comprising a stand (40), on which the housing (10) stands, so that a container (41) for containing the product can be placed directly below the outlet opening(s) (13).

5. The dosing dispenser according to claim 4, wherein the stand (40) forms a closed dispensing space (61) with stand side wall (62) and preferably stand bottom (63).

6. The dosing dispenser according to claim 5, wherein the stand side wall (62) completely surrounds the closed dispensing space (61) and a stand opening (64) for inserting the container (41) is recessed in the stand side wall (62),

7. The dosing dispenser according to claim 5 or 6, wherein the stand side wall (62) and/or the stand bottom (63) each comprises or comprise at least one hollow space (66) for thermal insulation, preferably filled with thermally insulating material.

8. The dosing dispenser according to any of claims 5 to 7, comprising a stand temperature control assembly (67) for actively tempering the dispensing space (61).

9. The dosing dispenser according to any of the preceding claims, wherein the containing space inner wall (9) comprises a refilling opening and a cover locking the refilling opening for inserting the bag (42).

10. The dosing dispenser according to any of the preceding claims, wherein the containing space inner wall (9) together with the bag support bottom (6) can be removed laterally from the housing (2), in particular swung out, for filling the containing space (10).

11. The dosing dispenser according to any of the preceding claims, wherein the free space (14) is formed around the entire circumference, possibly interrupted by at least one unit space (80), and/or along the entire height of the containing space inner wall (9).

12. The dosing dispenser according to any of the preceding claims, wherein a thermally insulating material is arranged in the free space (14), in particular formed as a hollow space between a double wall.

13. The dosing dispenser according to any of the preceding claims, comprising at least one containing space temperature controlling unit (68), which is arranged in particular radially outside the containing space inner wall (9).

14. The dosing dispenser according to claim 13, wherein an unit space (80) is formed in the housing (2), which is delimited radially inwards by the containing space inner wall (9), wherein the containing space temperature control unit (68) is arranged completely or partially in the assembly space (80).

15. The dosing dispenser according to any of the preceding claims, wherein at least one metal inlay (69) for transmitting cooling or heating power to the bag (42) is arranged in the containing space (10), preferably for direct contact with the bag (42).

## Revendications

1. Distributeur doseur (1) destiné au commerce de détail et à la gastronomie, comprenant
- un boîtier (2),
- au moins un espace de réception (10) réalisé dans le boîtier (2) pour recevoir au moins un sachet (42) avec du produit visqueux,
- par espace de réception (10) respectivement un poinçon (20) disposé dans l'espace de réception (10) pour exprimer le produit de l'au moins un sachet (42),
- par poinçon (20) un dispositif d'actionnement (21) guidé dans le boîtier (2) et/ou prenant appui sur le boîtier, pour actionner de manière mobile linéairement le poinçon (20), et
- au moins une ouverture de sortie (13), de préférence précisément une ouverture de sortie (13) par espace de réception, pour le produit, qui est réalisée dans la zone d'une première extrémité (11) de l'espace de réception (10),
- dans lequel l'espace de réception respectif est formé par une paroi d'espace de réception cylindrique (9) et sur la première extrémité (11) par un fond de dépôt de sachet (6),
**caractérisé en ce que**
- un espace libre (14) est formé entre la paroi d'espace de réception (9) et une paroi extérieure, de préférence une paroi extérieure latérale (4), du boîtier (2).

2. Distributeur doseur selon la revendication 1, dans lequel l'espace de réception (10) présente une deuxième extrémité (12) faisant face à la première extrémité (11), dans lequel l'espace de réception (10) sur la deuxième extrémité (12) est ouvert sur la totalité de la section transversale.

3. Distributeur doseur selon l'une quelconque des revendications précédentes,
- dans lequel l'espace de réception (10) jouxte par sa première extrémité (11) directement une paroi extérieure avec l'ouverture de sortie (13), de préférence la paroi extérieure de fond (3), du boîtier (2), dans lequel ladite paroi extérieure forme le fond de dépôt de sachet (6) ou
- dans lequel l'espace de réception (10) est formé sur la première extrémité (11) par une paroi d'espace de réception cylindrique (9) et un fond d'espace de réception (56), qui forme le fond de dépôt de sachet (6), dans lequel l'ouverture de sortie (13) est réalisée dans le fond d'espace de réception (56), dans lequel la structure composée de la paroi d'espace de réception (9) et du fond d'espace de réception (56) est enfichée dans un évidement de la paroi extérieure, de préférence la paroi extérieure de fond (3), du boîtier (2).

4. Distributeur doseur selon l'une quelconque des revendications précédentes, comprenant un socle (40), sur lequel le boîtier (10) se dresse si bien qu'un contenant (41) pour recevoir le produit peut être placé directement sous la/les ouverture(s) de sortie (13).

5. Distributeur doseur selon la revendication 4, dans lequel le socle (40) forme un espace de distribution fermé (61) avec une paroi latérale de socle (62) et de préférence le fond de socle (63).

6. Distributeur doseur selon la revendication 5, dans lequel la paroi latérale de socle (62) entoure totalement l'espace de distribution fermé (61) et une ouverture de socle (64) pour insérer le contenant (41) est évidée dans la paroi latérale de socle (62).

7. Distributeur doseur selon l'une quelconque des revendications 5 ou 6, dans lequel la paroi latérale de socle (62) et/ou le fond de socle (63) présente/présentent respectivement au moins un espace creux (66) pour l'isolation thermique, de préférence avec remplissage d'un matériau thermo-isolant.

8. Distributeur doseur selon l'une quelconque des revendications 5 à 7, comprenant un groupe de thermorégulation de socle (67) pour thermoréguler activement l'espace de distribution (61).

9. Distributeur doseur selon l'une quelconque des revendications précédentes, dans lequel la paroi d'espace de réception (9) comprend une ouverture de remplissage ultérieur et un couvercle fermant l'ouverture de remplissage ultérieur, destiné à insérer le sachet (42).

10. Distributeur doseur selon l'une quelconque des revendications précédentes, dans lequel la paroi d'espace de réception (9) y compris le fond de dépôt de sachet (6) peut être retirée latéralement, en particulier peut être sortie par pivotement, du boîtier (2) pour remplir l'espace de réception (10).

11. Distributeur doseur selon l'une quelconque des revendications précédentes, dans lequel l'espace libre (14) est formé en totalité en périphérie, éventuellement de manière interrompue, par au moins un espace de groupe (80), et/ou le long de la totalité de la hauteur de la paroi d'espace de réception (9).

12. Distributeur doseur selon l'une quelconque des revendications précédentes, dans lequel un matériau thermo-isolant est disposé dans l'espace libre (14), en particulier réalisé en tant qu'espace creux entre une double paroi.

13. Distributeur doseur selon l'une quelconque des revendications précédentes, comprenant au moins un groupe de thermorégulation d'espace de réception (68), qui est disposé en particulier radialement à l'extérieur de la paroi d'espace de réception (9).

14. Distributeur doseur selon la revendication 13, dans lequel est formé dans le boîtier (2) un espace de groupe (80), qui est délimité radialement à l'intérieur par la paroi d'espace de réception (9), dans lequel le groupe de thermorégulation d'espace de réception (68) est disposé en totalité ou en partie dans l'espace de groupe (80).

15. Distributeur doseur selon l'une quelconque des revendications précédentes, dans lequel au moins un inlay (69) métallique pour la transmission d'une puissance frigorifique ou thermique est disposé sur le sachet (42) dans l'espace de réception (10), en particulier en vue du contact direct avec le sachet (42).
